# EUROPÄISCHE PATENTSCHRIFT

(11) **EP 1 972 501 B1**
(45) Veröffentlichungstag und Bekanntmachung des Hinweises auf die Patenterteilung: **13.03.2013**
(21) Anmeldenummer: 08005283.0
(22) Anmeldetag: 20.03.2008
(51) Int. Cl.: B60R 9/06, B60D 1/52

(54) **Lastenträger für ein Kraftfahrzeug**
Load carrier for a motor vehicle
Support de charge pour un véhicule automobile

(30) Priorität: 22.03.2007 DE 102007014442
(43) Veröffentlichungstag der Anmeldung: 24.09.2008
(60) Teilanmeldung: 12005694.0
(73) Patentinhaber: WESTFALIA - Automotive GmbH, 33378 Rheda-Wiedenbrück (DE)
(72) Erfinder: Hahn, Jochen, 74223 Flein (DE); Benda, Thomas, Dr., 37574 Einbeck (DE)
(74) Vertreter: Bregenzer, Michael

(56) Entgegenhaltungen:
- DE-A1- 10 144 550
- DE-A1- 10 309 327
- DE-A1- 10 338 723

## Beschreibung

Die Erfindung betrifft einen Lastenträger für ein Kraftfahrzeug, insbesondere einen Personenkraftwagen, mit einer Trageanordnung zum Tragen einer Last, und mit einer Schwenklageranordnung zum Schwenken der Trageanordnung zwischen einer Nichtgebrauchsstellung und einer Arbeitsstellung, wobei die Trageanordnung in der Arbeitsstellung zum Auflegen einer Last nach hinten vor einen Heckbereich des Kraftfahrzeugs vorsteht, gemäß dem Oberbegriff des Anspruchs 1.

Ein derartiger Lastenträger geht beispielsweise aus DE 103 09 327 A1 und DE-A1-101 44550 hervor.

Ein weiterer Lastenträger ist beispielsweise aus der DE 42 31 568 A1 bekannt. Der Lastenträger ist um eine horizontale Schwenkachse schwenkbar und beispielsweise an das Fahrzeugheck des Kraftfahrzeugs, beispielsweise eines Personenkraftwagens, heranklappbar. Der Lastenträger bildet eine Art Heckklappe für das Kraftfahrzeug. In seiner Arbeitsstellung ist der Lastenträger nach unten geschwenkt, sodass auf seine plattenartige Trageanordnung Gegenstände aufgelegt werden können.

Der aus DE 42 31 568 A1 bekannten Lastenträger behindert zumindest den in seiner Nichtgebrauchszustellung eine den Zugang zum Heck des Fahrzeugs, beispielsweise den Zugang zu einem Gepäckraum.

DE 42 31 568 A1 schlägt ferner eine teleskopartig aus einem Kraftfahrzeug ausziehbare Trageplattform vor. Zur Aufnahme der Plattform innerhalb der Karosserie des Kraftfahrzeugs ist jedoch ein großzügiger Aufnahmeraum vorzusehen.

Es ist daher die Aufgabe der vorliegenden Erfindung, einen Lastenträger für Kraftfahrzeuge vorzuschlagen, der in seiner Nichtgebrauchsstellung platzsparend und die Zugänglichkeit des Kraftfahrzeuges nicht behindernd unterbringbar ist.

Zur Lösung der Aufgabe ist ein Lastenträger gemäß der technischen Lehre des Anspruchs 1 vorgesehen.

In dem Bereich unterhalb der Karosserie stört die Trageanordnung bei Nichtgebrauch nicht. Der Lastenträger befindet sich zweckmäßigerweise nicht nur in der Arbeitsstellung, sondern auch in der Nichtgebrauchsstellung außerhalb eines Innenraumes des Kraftfahrzeuges. Somit sind dort keine Verschmutzungen zu befürchten. Zudem ist ein Aufnahmeraum für den Lastenträger innerhalb der Karosserie des Kraftfahrzeuges nicht notwenig.

In dem Ruhestellungsbereich ist der Lastenträger zweckmäßigerweise im wesentlichen gegen Sicht verdeckt. Eine hinter dem Kraftfahrzeug stehende Person, insbesondere eine erwachsene Person, sieht, zumindest wenn sie aufrecht steht, den Lastenträger nicht oder kaum. Beispielsweise befindet sich die Trageanordnung in der Nichtgebrauchsstellung oberhalb einer Sichtlinie, die in einem Bereich zwischen 10 und 30 Grad, vorzugsweise 15 Grad, zur Fahrbahnoberfläche schräg geneigt ist.

In der Arbeitsstellung ist die Trageanordnung zweckmäßigerweise höher, d.h. weiter von einer Fahrbahnoberfläche entfernt, angeordnet als in der Nichtgebrauchsstellung. Somit ist die Trageanordnung für den Gebrauch besser zugänglich. Auf der Trageanordnung abgestellte Gegenstände, beispielsweise Koffer, Fahrräder oder dergleichen, sind in der Arbeitsstellung des Lastenträgers weiter von der Fahrbahnoberfläche entfernt.

Die Trageanordnung macht zweckmäßigerweise bei einem Verstellen zwischen der Arbeitsstellung und der Nichtgebrauchsstellung eine Hoch-Tief-Bewegung oder eine Hoch-Tief-Hoch-Bewegung. Die Schwenklageranordnung ist dazu vorzugsweise so ausgestaltet, dass die Trageanordnung unter einem nach unten vorstehenden Bauteil, beispielsweise einem Stoßfänger, dem Tank des Kraftfahrzeugs oder dergleichen, durchtauchen kann.

Dabei ist es möglich, dass die Schwenklageranordnung eine freie Bewegung der Trageanordnung zulässt, d.h. dass die Trageanordnung durch Bedienereingriff geführt wird. Besonders bevorzugt ist aber, wenn die Schwenklageranordnung die Hoch-Tief-Bewegung der Trageanordnung führt. Z.B. ist eine Kurvensteuerung, eine Kulissenführung mit mindestens einer Führungskulisse oder dergleichen, vorteilhaft. Eine Fehlbedienung des Lastenträgers, bei der die Trageanordnung die Hoch-Tief-Bewegung nicht oder nur unzureichend durchführt, was eventuell zu Beschädigungen des Kraftfahrzeugs führen könnte, wird dadurch vermieden.

Die Trageanordnung ist vorzugsweise an einer Schwenklageranordnung zwischen der Arbeitsstellung und der Nichtgebrauchsstellung um eine Schwenkachse schwenkbar und entlang der Schwenkachse zudem axial verschieblich gelagert. Die Schwenkachse ist dabei z.B. vertikal oder steht horizontal schräg in Fahrzeuglängsrichtung und/oder Fahrzeugquerrichtung. Dies ermöglicht z.B. eine Hoch-Tief-Bewegung oder eine Hoch-Tief-Hoch-Bewegung der Trageanordnung. Diese kinematische Variante ist sowohl bei einem fest am Kraftfahrzeug montierten Lastenträger als auch bei einem vom Kraftfahrzeug lösbaren Lastenträger vorteilhaft anwendbar.

Ein oberseitiger Tragebereich der Trageanordnung ist zweckmäßigerweise in der Arbeitsstellung und in der Nichtgebrauchsstellung von der Fahrbahnoberfläche abgewandt. Prinzipiell wäre es natürlich auch denkbar, dass die Trageanordnung um eine horizontale Schwenkachse geschwenkt wird, sodass der in der Arbeitsstellung oberseitige Tragebereich in der Nichtgebrauchsstellung zur Fahrbahnoberfläche hin gewandt ist.

Der Tragebereich verläuft zumindest in der Arbeitsstellung zweckmäßigerweise im wesentlichen horizontal. Auch in der Nichtgebrauchsstellung ist ein horizontaler Verlauf vorteilhaft. Allerdings ist es auch möglich, dass der Tragebereich in der Nichtgebrauchsstellung schräg geneigt ist.

Vorteilhafterweise ist die Trageanordnung an mindestens einem Schwenkarm angeordnet. Es kann auch eine Schwenkarmanordnung vorgesehen sein.

Der mindestens eine Schwenkarm ist vorteilhaft mit mindestens einem ersten Schwenklager bezüglich des Kraftfahrzeugs schwenkbeweglich gelagert und trägt ein mindestens einem zweiten Schwenklager die Trageanordnung. Es wäre allerdings auch denkbar, dass die Trageanordnung fest an dem Schwenkarm angeordnet ist. Der mindestens eine Schwenkarm kann zwar im wesentlichen gerade verlaufen. Zweckmäßig können aber auch gekrümmte, winkelige oder bogenförmige Verläufe sein, sodass er in der Arbeitsstellung oder Nichtgebrauchsstellung ein Bauteil des Kraftfahrzeugs, beispielsweise seinen Stoßfänger, umgreift. Umgreifen ist hier in einem weiteren Sinne zu verstehen, d.h. der mindestens eine Schwenkarm hat zweckmäßigerweise stets einen Mindestabstand zu dem Bauteil, das er umgreift. Ein gekrümmter, winkeliger oder bogenförmiger Verlauf kann auch dazu vorgesehen sein, dass der Schwenkarm in seiner Ruhestellung oder Arbeitsstellung möglichst wenig Platz braucht oder weit von der Fahrbahnoberfläche entfernt ist.

Eine erste Ausführungsform der Erfindung sieht vor, dass der Lastenträger dauerhaft, d.h. fest an dem Kraftfahrzeug befestigt ist. Vorteilhaft kann es auch sein, wenn die Trageanordnung an der Schwenklageranordnung lösbar befestigt ist. Hierzu kann die Schwenklageranordnung z.B. zwei miteinander lösbar verbundene Lagerteile aufweisen. Ferner ist es möglich, dass die Schwenklageranordnung eine Befestigungseinrichtung zum lösbaren Befestigen der Trageanordnung aufweist. Der Lastenträger ist zumindest im wesentlichen von dem Kraftfahrzeug entfernbar, wenn er nicht gebraucht wird.

Die Schwenklageranordnung weist vorteilhaft eine Aufnahmehalterung auf, an der wahlweise ein die Trageanordnung haltendes Lagerteil oder ein Kugelhals zum Anhängen eines Anhängers anordenbar ist. Der Lastenträger bzw. dessen fahrzeugseitige Halterung ist dadurch multifunktional, d.h. er kann zum Tragen einer Traglast auf der Trageanordnung dienen. Alternativ kann das Kraftfahrzeug auch einen Anhänger ziehen.

Das Lagerteil ist an der Aufnahmehalterung zum Verstellen der Trageanordnung zwischen der Arbeitsstellung und der Nichtgebrauchsstellung zweckmäßigerweise um eine Schwenkachse schwenkbar und zudem entlang der Schwenkachse axial verschieblich. Dies lässt beispielsweise die vorgenannte Hoch-Tief-Bewegung zu.

Die Schwenkachse ist zweckmäßigerweise eine vertikale Schwenkachse. Dabei sei betont, dass auch eine schräg zur Vertikalen stehende Schwenkachse und/oder eine Schwenkachse, die bezüglich der Fahrzeuglängsachse schräg steht, denkbar sind. Schräg stehende Schwenkachsen erleichtern unter Umständen ein Durchtauchen unter Bauteilen des Kraftfahrzeugs hindurch beim Schwenken zwischen der Nichtgebrauchsstellung und der Arbeitsstellung.

Vorzugsweise hat die Schwenklageranordnung eine Entnahmesicherung, die ein Entfernen des Lagerteils von der Aufnahmehalterung verhindert. Die Entnahmesicherung ist zweckmäßigerweise in ihre Sicherungsstellung federbelastet. Das Lagerteil ist nach einem Lösen der Entnahmesicherung von de Aufnahmehalterung entfernbar. Die Entnahmesicherung enthält beispielsweise einen zweckmäßigerweise federbelasteten Bolzen oder dergleichen, der vor einen Anschlag, beispielsweise eine obere Stirnseite, der Aufnahmehalterung vorsteht und somit verhindert, dass die Trageanordnung beim Verstellen zwischen der Arbeitsstellung und der Nichtgebrauchsstellung sozusagen aus der Aufnahmehalterung heraus fällt.

Zum Anbringen der Schwenklageranordnung an dem Kraftfahrzeug eignen sich vorzugsweise Längsträger oder Querträger. Während die Längsträger üblicherweise integrale Bestandteile einer Karosserie des Kraftfahrzeugs bilden, ist ein Querträger vorzugsweise ein an der Karosserie zusätzlich befestigtes Bauteil.

Der Ruhestellungsbereich oder Ruhestellungsraum ist beispielsweise zumindest teilweise zwischen den Längsträgern der Karosserie des Kraftfahrzeugs vorgesehen.

Die Trageanordnung weist vorzugsweise mindestens ein Schwenkträgerteil auf, das in der Arbeitsstellung der Trageanordnung zur Vergrößerung eines Basis-Tragebereichs der Trageanordnung derart schwenkbar ist, dass es vor dem Basis-Tragebereich vorsteht. Zur platzsparenden Unterbringung der Trageanordnung in dem Ruhestellungsbereich ist das Schwenkträgerteil zu dem Basis-Tragebereich hin schwenkbar. Das Schwenkträgerteil liegt beispielsweise in seiner Ruhestellung auf dem Basis-Tragebereich auf. Aber auch ausziehbare, insbesondere teleskopierbare Trageteile können vorgesehen sein, die in der Arbeitsstellung ausgezogen sind und so den Tragebereich vergrößern, während sie in einer eingeschobenen Stellung ein Schwenken der Trageanordnung in den Ruhestellungsraum zulassen.

Die Trageanordnung weist vorzugsweise eine Trägerplattform auf. Die Trageanordnung kann auch Halterungen aufweisen oder Befestigungsmöglichkeiten zum Anbringen von z.B. bei Nichtgebrauch entfernbaren Halterungen enthalten, beispielsweise für Sportgerätehalterungen. Sportgerätehalterungen sind beispielsweise eine Fahrradhalterung, eine Halterung für Ski, für Surfbretter oder dergleichen.

Nachfolgend werden Ausführungsbeispiele der Erfindung anhand der Zeichnung erläutert. Es zeigen:

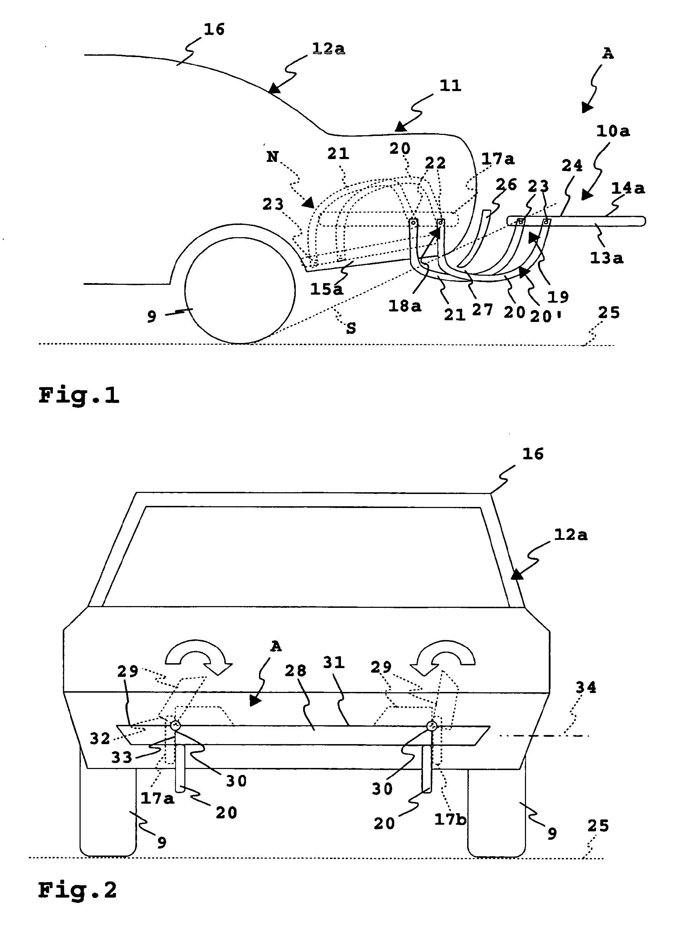

- Figur 1: eine schematische Seitenansicht eines Kraftfahrzeugs mit einem ersten Ausführungsbeispiel eines nicht erfindungsgemäßen Lastenträgers,
- Figur 2: eine schematische Heckansicht des Kraftfahrzeugs mit dem Lastenträger gemäß Figur 1,
- Figur 3: eine schematische Seitenansicht eines Personenkraftwagens mit einem erfindungsgemäßen Lastenträger, und
- Figur 4: die Seitenansicht entsprechend Figur 3 mit einer Aufnahmehalterung und einem daran angeordneten Kugelhals, der alternativ zu dem Lastenträger gemäß Figur 3 an der Aufnahmehalterung befestigt ist.

Bei den nachfolgenden Ausführungsbeispielen sind gleiche oder ähnliche Komponenten mit den selben Bezugszeichen versehen und werden zur einmal erläutert.

Ein Lastenträger 10a ist in einem Heckbereich 11 eines Kraftfahrzeugs 12a befestigt. Das Kraftfahrzeug 12a ist etwa bis zu einem Bereich seiner Räder 9 dargestellt. Eine Trageanordnung 13a mit einer Trägerplattform 14a ist zwischen einer Arbeitsstellung A, bei der die Trägerplattform 14a nach hinten vor das Kraftfahrzeug 12a vorsteht, und einer Nichtgebrauchsstellung N schwenkbar, bei der die Trageanordnung 13a in einem Bereich unterhalb einer Karosserie 16 des Kraftfahrzeugs 12a geschwenkt ist. In der Nichtgebrauchsstellung N befindet sich die Trägerplattform 14a in einem Ruhestellungsbereich 15a an der Unterseite der Karosserie 16. Beispielsweise befindet sich der Ruhestellungsbereich 15a zwischen Längsträgern 17a, 17b der Karosserie 16.

Die Trageanordnung 13a ist an einer Schwenklageranordnung 18a bezüglich der Karosserie 16 schwenkbar gelagert. Die Schwenklageranordnung 18a enthält zwei Mehrgelenkanordnungen 19, beispielsweise Viergelenk-Anordnungen, die an der Karosserie 16, vorzugsweise an deren Längsträgern 17a, 17b angeordnet ist. Die Schwenklageranordnung 18a ist fest an den Längsträgern 17a befestigt.

Jede Mehrgelenkanordnung 19 enthält Schwenkarmpaare 20' bildende Schwenkarme 20, 21, die an ersten Schwenklagern 22 bezüglich der Karosserie 16 schwenkbeweglich sind. Die ersten Schwenklager 22 befinden sich an ersten Längsenden der Schwenkarme 20, 21. An diesen Längsenden entgegengesetzten Längsenden sind zweite Schwenklager 23 vorgesehen, mit denen die Trageanordnung 13a mit den Schwenkarmen 20, 21 schwenkbeweglich verbunden ist. Die Schwenklager 23 sind z.B. unterhalb oder an Seitenwänden oder Seitenflächen der Trägerplattform 14 angeordnet.

Die Schwenkarme 20, 21 verlaufen über Kreuz.

Die Mehrgelenkanordnung 19 sorgt dafür, dass ein oberseitiger Tragebereich 24 der Trägerplattform 14a sowohl in der Arbeitsstellung A als auch in der Nichtgebrauchsstellung N von einer Fahrbahnoberfläche 25 abgewandt ist. Die Trageanordnung 13a nimmt in der Arbeitsstellung A eine im Vergleich zur Nichtgebrauchsstellung N höhere Position bezüglich der Fahrbahnoberfläche 25 ein. Beispielsweise befinden sich die Schwenklager 22 und die Schwenklager 23 in der Arbeitsstellung A im wesentlichen in derselben Horizontalposition. In der Nichtgebrauchsstellung N hingegen sind die zweiten Schwenklager 23 näher bei der Fahrbahnoberfläche 25 als die an den Längsträgern 17 angeordneten Schwenklager 22.

In der Arbeitsstellung A hat der Tragebereich 24 vorzugsweise einen horizontalen Verlauf. In der Nichtgebrauchsstellung N weist der Tragebereich 24 eine Schräglage auf. Diese Schräglage ist zweckmäßigerweise so gewählt, dass der Tragebereich 24 nahe an einer Unterseite der Karosserie 16 ist und, vorzugsweise an der Unterseite der Karosserie 16 anliegt. Jedenfalls behindert die Trageanordnung 13 in ihrer Nichtgebrauchsstellung N eine Bodenfreiheit des Kraftfahrzeugs 12a nicht oder zumindest nur unwesentlich.

Die Schwenkarme 21, 22 haben einen gekrümmten Verlauf. In der Arbeitsstellung A verlaufen die Schwenkarme 20, 21 um einen Stoßfänger 26 des Kraftfahrzeugs 12a herum. Zweckmäßigerweise ist ein Abstand 27 zwischen dem Stoßfänger 26 und den Schwenkarmen 20, 21 in deren Arbeitsstellung A vorgesehen.

Beim Schwenken von der Arbeitsstellung A in die Nichtgebrauchsstellung N und umgekehrt macht die Trageanordnung 13 eine Hoch-Tief-Hoch-Bewegung, bei der sie unter dem Stoßfänger 26 hindurchtaucht. In einem Zwischenabschnitt eines Verstellweges zwischen der Arbeitsstellung A und der Nichtgebrauchsstellung N hat die Trageanordnung 13a mindestens eine Zwischenstellung, bei der sie näher bei der Fahrbahnoberfläche 25, d.h. tiefer, als in der Arbeitsstellung A und/oder der Nichtgebrauchsstellung N ist.

In der Nichtgebrauchsstellung N ist die Trageanordnung 13a oberhalb eine Sichtlinie S positioniert und somit gegen Sicht verdeckt.

Die Trägerplattform 14a enthält eine Basis-Trägerplattform 28, an der Schwenkträgerteile 29 schwenkbeweglich angeordnet sind. Die Schwenkträgerteile 29 sind mit Schwenklagern 30, z.B. Schwenkscharnieren, an der Basis-Trägerplattform 28 schwenkbar gelagert. In der Arbeitsstellung stehen die Schwenkträgerteile 29 vor die Basis-Trägerplattform 28 vor und vergrößern deren Basis-Tragebereich 31.

Prinzipiell wäre es möglich, Schwenkträgerteile vorzusehen, die eine jeweilige Trägerplattform in Fahrzeuglängsrichtung vergrößern.

Bei dem Lastenträger 10a jedoch sind die Schwenkträgerteile 29 bezüglich der Fahrzeugquerrichtung des Kraftfahrzeugs 12a seitlich an der Basis-Trägerplattform 28 angeordnet. Zum Schwenken der Trägerplattform 14 in den Ruhestellungsraum oder Ruhestellungsbereich 15a werden die Schwenkträgerteile 29 zur Fahrzeugmitte, d.h. nach innen, geschwenkt, sodass eine Quererstreckungslänge der Trägerplattform 14 verkleinert ist. Somit passt die Trägerplattform 14 zwischen die beiden Längsträger 17a, 17b. Der Ruhestellungsraum oder -bereich 15 kann somit in Fahrzeugquerrichtung schmaler sein, als er für eine nichtklappbare Trägerplattform sein müsste. Die Schwenkträgerteile 29 liegen auf dem Basis-Tragebereich 31 auf, wenn sie zur Fahrzeugmitte hin geschwenkt sind. Wenn die Schwenkträgerteile 29 nach außen geschwenkt sind, liegen ihre bei den Schwenklagern 30 befindlichen Seitenwände 32 an Vertikal-Seitenwänden 33 der Basis-Trägerplattform 28 an. Die Seitenwände 33 stützen somit die Schwenkträgerteile 29 in deren nach außen geschwenkten Arbeitsstellung.

Schwenkachsen 34 der Schwenklager 22, 23 verlaufen horizontal. Die Trageanordnung 13a schwenkt um eine horizontale, frei im Raum stehende Schwenkachse.

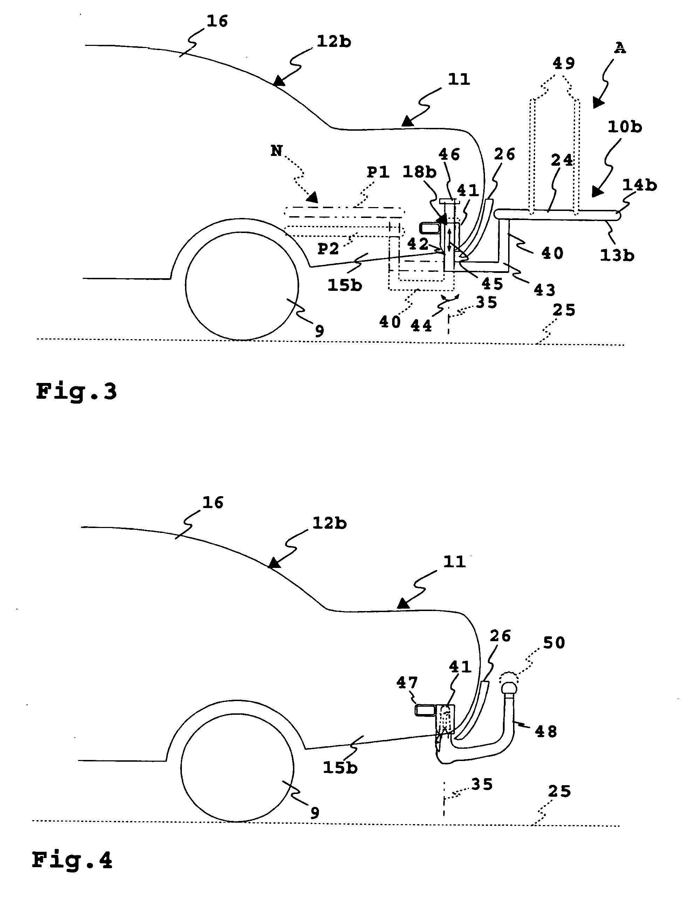

Bei einem erfindungsgemässen Lastenträger 10b der Fig. 3 hingegen ist ein Schwenken um eine vertikale Schwenkachse 35 realisiert:

Der Lastenträger 10b ist im Heckbereich 11 eines Kraftfahrzeugs 12b angeordnet. Die Schwenkachse 35 verläuft vertikal und wird durch eine Aufnahmehalterung 41 definiert, die eine Lageraufnahme für ein Lagerteil 42 bildet. Das Lagerteil 42 steht nach vertikal von einem Schwenkarm 40 ab. Ein gekröpfter Abschnitt 43 des Schwenkarms 40 verläuft an in der Arbeitsstellung A unterhalb eines Stoßfängers 26 an diesem vorbei. Somit nimmt eine Trägerplattform 14b einer Trageanordnung 13b des Lastenträgers 10b zumindest in der Arbeitsstellung A eine gegenüber einer Unterkante des Stoßfängers 26 höhere Position ein.

Bei den Kraftfahrzeugen 12a, 12b ist an deren Stoßfängern 26 kein Ausschnitt erforderlich, um die Lastenträger 10a, 10b von der Arbeitsstellung A in die Nichtgebrauchsstellung N zu schwenken und umgekehrt.

Während beim Lastenträger 10a die Mehrgelenkanordnung 19 ein Untertauchen des Stoßfängers 26 ermöglicht, ist dies bei dem Lastenträger 10b dadurch realisiert, dass das Lagerteil 42 nicht nur um die Schwenkachse 35 schwenkbar, sondern entlang der Schwenkachse 35 auch axial verschieblich ist, was in der Zeichnung durch Pfeile 44, 45 angedeutet ist. Somit kann die Trägerplattform 14b unter dem Stossfänger 26a hindurchtauchen, wenn sie von der Arbeitsstellung A in die Nichtgebrauchsstellung N bewegt wird. Beispielsweise wird eine nicht dargestellte Verriegelung gelöst, sodass das Lagerteil 42 entlang der Schwenkachse 35a nach unten verstellt werden kann.

Eine Entnahmesicherung 46, beispielsweise ein federbelasteter Bolzen an der Oberseite des Lagerteils 42, verhindert, dass der Lastenträger 10b aus der Aufnahmehalterung 41 nach unten herausfällt. Die Entnahmesicherung 46 bildet beispielsweise einen Axialanschlag für eine Axialverstellung entlang der Schwenkachse 35 nach unten.

Durch Lösen der Entnahmesicherung 46, beispielsweise durch Drücken des entsprechenden Bolzens gegen Federkraft, wird das Lagerteil 42 bezüglich der Aufnahmehalterung 41 entriegelt. Sodann kann der Lastenträger 10b von der Aufnahmehalterung 41 weggenommen werden.

Die Aufnahmehalterung 41 ist an einem Querträger 47 des Kraftfahrzeugs 12b angeordnet. In die Aufnahmehalterung 41 kann anstelle des Lastenträgers 10b alternativ ein Kugelhals 48 zum Anhängen eines Anhängers 50 eingesteckt werden, wie in Fig. 4 dargestellt.

Die Trägerplattform 14b kann in der Nichtgebrauchsstellung N dieselbe Höhenposition P1 bezüglich der Fahrbahnoberfläche 25 einnehmen wie in der Arbeitsstellung A. Es ist aber auch möglich, dass die Trägerplattform 14b in der Nichtgebrauchsstellung N eine höhere oder tiefere Horizontalposition P2 einnimmt als in der Arbeitsstellung A.

An den Trägerplattformen 14a, 14b können Sportgerätehalterungen 49, beispielsweise Rohre zum Halten von Fahrrädern oder dergleichen, vorgesehen sein. Es versteht sich, dass solche Sportgerätehalterungen 49 auch unmittelbar als Tragarmen oder Traggittern angeordnet sein können, die nach dem erfindungsgemäßen Prinzip in eine unterhalb des jeweiligen Kraftfahrzeugs befindliche Nichtgebrauchsstellung N schwenkbar sind.

## Patentansprüche

1. Lastenträger für ein Kraftfahrzeug (12b), insbesondere einen Personenkraftwagen, mit einer Trageanordnung (13b) zum Tragen einer Last, und mit einer Schwenklageranordnung ( 18b) zum Schwenken der Trageanordnung (13b) zwischen einer Nichtgebrauchsstellung (N) und einer Arbeitsstellung (A), wobei die Trageanordnung (13b) in der Arbeitsstellung (A) zum Auflegen einer Last nach hinten vor einen Heckbereich (11) des Kraftfahrzeugs (12b) vorsteht, wobei die Trageanordnung (13b) zur Einnahme der Nichtgebrauchsstellung (N) in einen Ruhestellungsbereich (15b) unterhalb einer Karosserie (16) des Kraftfahrzeugs (12b) schwenkbar ist, **dadurch gekennzeichnet, dass** die Trageanordnung (13b) an einer Schwenklageranordnung (18b) zwischen der Arbeitsstellung (A) und der Nichtgebrauchsstellung (N) um eine Schwenkachse (35) schwenkbar und entlang der Schwenkachse (35) axial verschieblich ist.

2. Lastenträger nach Anspruch 1, **dadurch gekennzeichnet, dass** die Trageanordnung (13b) in dem Ruhestellungsbereich ( 15b) zumindest im wesentlichen gegen Sicht verdeckt ist.

3. Lastenträger nach Anspruch 1 oder 2, **dadurch gekennzeichnet, dass** die Trageanordnung (13b) in der Nichtgebrauchsstellung (N) eine zu einer Fahrbahnoberfläche (25) näher gelegene, tiefere Position aufweist als in der Arbeitsstellung (A).

4. Lastenträger nach einem der vorhergehenden Ansprüche, **dadurch gekennzeichnet, dass** die Trageanordnung (13b) bei einem Verstellen zwischen der Arbeitsstellung (A) und der Nichtgebrauchsstellung (N) in einer Hoch-Tief-Bewegung oder Hoch-Tief-Hoch-Bewegung an der Schwenklageranordnung (18b) schwenkbar ist, so dass die Trageanordnung (13b) unter einem nach unten vorstehenden Bauteil des Kraftfahrzeugs (12b), insbesondere einem Stoßfänger (26), durchtaucht.

5. Lastenträger nach einem der vorhergehenden Ansprüche, **dadurch gekennzeichnet, dass** ein oberseitiger Tragebereich (24) der Trageanordnung (13b) in der Arbeitsstellung (A) und in der Nichtgebrauchsstellung (N) von der Fahrbahnoberfläche (25) abgewandt ist.

6. Lastenträger nach einem der vorhergehenden Ansprüche, **dadurch gekennzeichnet, dass** der Tragebereich (24) in der Arbeitsstellung (A) und in der Nichtgebrauchsstellung (N) im wesentlichen horizontal verläuft.

7. Lastenträger nach einem der vorhergehenden Ansprüche, **dadurch gekennzeichnet, dass** die Trageanordnung (13b) an mindestens einem Schwenkarm (40) angeordnet ist.

8. Lastenträger nach Anspruch 7, **dadurch gekennzeichnet, dass** der mindestens eine Schwenkarm (40) zumindest abschnittsweise gekrümmt und/oder winkelig ist.

9. Lastenträger nach einem der vorhergehenden Ansprüche, **dadurch gekennzeichnet, dass** die Trageanordnung (13b) an der Schwenklageranordnung (18b) lösbar befestigt ist.

10. Lastenträger nach Anspruch 9, **dadurch gekennzeichnet, dass** die Schwenklageranordnung (18b) eine Aufnahmehalterung (41) aufweist, an der wahlweise ein die Trageanordnung (13b) haltendes Lagerteil (42) oder ein Kugelhals (48) zum Anhängen eines Anhängers (50) anordenbar ist.

11. Lastenträger nach Anspruch 10, **dadurch gekennzeichnet, dass** das Lagerteil (42) an der Aufnahmehalterung (41) zum Verstellen der Trageanordnung (13b) zwischen der Arbeitsstellung (A) und der Nichtgebrauchsstellung (N) um eine Schwenkachse (35) schwenkbar und entlang der Schwenkachse (35) axial verschieblich ist.

12. Lastenträger nach einem der Ansprüche 9 bis 11, **dadurch gekennzeichnet, dass** die Schwenklageranordnung (18b) eine Entnahmesicherung (46) aufweist, die ein Entfernen des Lagerteils (42) von der Aufnahmehalterung (41) verhindert, und dass das Lagerteil (42) nach einem Lösen der Entnahmesicherung (46) von der Aufnahmehalterung (41) entfernbar ist.

13. Lastenträger nach einem der vorhergehenden Ansprüche, **dadurch gekennzeichnet, dass** die Trageanordnung (13b) um eine vertikale Schwenkachse (35) und/oder eine zur Vertikalen schräge Schwenkachse (35) schwenkbar ist.

14. Lastenträger nach einem der vorhergehenden Ansprüche, **dadurch gekennzeichnet, dass** die Schwenklageranordnung ( 18b) an Längsträgern (17a, b) einer Karosserie (16) des Kraftfahrzeugs (12b) und/oder an einem Querträger (47) des Kraftfahrzeugs (12b) angeordnet ist.

15. Lastenträger nach einem der vorhergehenden Ansprüche, **dadurch gekennzeichnet, dass** der Ruhestellungsbereich (15b) zumindest teilweise zwischen Längsträgern (17a, b) einer Karosserie (16) des Kraftfahrzeugs (12b) vorgesehen ist.

16. Lastenträger nach einem der vorhergehenden Ansprüche, **dadurch gekennzeichnet, dass** die Trageanordnung (13b) mindestens ein Schwenkträgerteil (29) aufweist, das in der Arbeitsstellung (A) der Trageanordnung (13b) zur Vergrößerung eines Basis-Tragebereichs (31) der Trageanordnung (13b) derart schwenkbar ist, dass es vor den Basis-Tragebereich (31) vorsteht, und zur platzsparenden Unterbringung der Trageanordnung 13b) in dem Ruhestellungsbereich (15b) zu dem Basis-Tragebereich (31) hin schwenkbar ist.

17. Lastenträger nach Anspruch 16 **dadurch gekennzeichnet, dass** das mindestens eine Schwenkträgerteil (29) in seiner Ruhestellung auf dem Basis-Tragebereich (31) aufliegt.

18. Lastenträger nach einem der vorhergehenden Ansprüche, **dadurch gekennzeichnet, dass** die Trageanordnung (13b) eine Trägerplattform (14b) umfasst und/oder mindestens eine Sportgerätehalterung (49), insbesondere eine Fahrradhalterung, zum Halten eines Sportgeräts, insbesondere eines Fahrrads, oder eine Befestigungseinrichtung zum Befestigen einer Sportgerätehalterung (49) aufweist.

## Claims

1. Load carrier for a motor vehicle (12b), in particular a car, with a support assembly (13b) for carrying a load, and with a swivel bearing assembly (18b) for swivelling the support assembly (13b) between an inoperative position (N) and an operating position (A), wherein the support assembly (13b) in the operating position (A) extends backwards in front of the rear section (11) of the motor vehicle (12b), wherein the support assembly (13b) may be swivelled, to adopt the inoperative position (N), into a rest position area (15b) beneath a body (16) of the motor vehicle (12b), **characterised in that** the support assembly (13b) may be pivoted around a swivel axis (35) on a swivel bearing assembly (18b) between the operating position (A) and the inoperative position (N) and is axially movable along the swivel axis (35).

2. Load carrier according to claim 1, **characterised in that** the support assembly (13b) in the rest position area (15b) is substantially concealed from view.

3. Load carrier according to claim 1 or 2, **characterised in that** the support assembly (13b) in the inoperative position (N) has a lower position closer to a road surface (25) than in the operating position (A).

4. Load carrier according to any of the preceding claims, **characterised in that** the support assembly (13b) may be swivelled during adjustment between the operating position (A) and the inoperative position (N) in an up-down movement or an up-down-up movement on the swivel bearing assembly (18b), so that the support assembly (13b) dips through below a downwards projecting part of the motor vehicle (12b), in particular a bumper (26).

5. Load carrier according to any of the preceding claims, **characterised in that** an upper-side carrying area (24) of the support assembly (13b) faces away from the road surface (25) in the operating position (A) and in the inoperative position (N).

6. Load carrier according to any of the preceding claims, **characterised in that** the carrying area (24) runs substantially horizontally in the operating position (A) and in the inoperative position (N).

7. Load carrier according to any of the preceding claims, **characterised in that** the support assembly (13b) is mounted on at least one swivel arm (40).

8. Load carrier according to claim 7, **characterised in that** the swivel arm or arms (40) is or are at least in part curved or angular.

9. Load carrier according to any of the preceding claims, **characterised in that** the support assembly (13b) is attached releasably to the swivel bearing assembly (18b).

10. Load carrier according to claim 9, **characterised in that** the swivel bearing assembly (18b) has a holder mounting (41) on which either a bearing part (42) holding the support assembly (13b) or a tow ball (48) for attaching a trailer (50) may be mounted.

11. Load carrier according to claim 10, **characterised in that** the bearing part (42) may be swivelled on the holder mounting (41) around a swivel axis (35) to shift the support assembly (13b) between the operating position (A) and the inoperative position (N), and may be moved axially along the swivel axis (35).

12. Load carrier according to any of claims 9 to 11, **characterised in that** the swivel bearing assembly (18b) has a release locking (46) to prevent removal of the bearing part (42) from the holder mounting (41), and that the bearing part (42) may be removed from the holder mounting (41) after the release locking (46) is unlocked.

13. Load carrier according to any of the preceding claims, **characterised in that** the support assembly (13b) may be swivelled around a vertical swivel axis (35) and/or a swivel axis (35) at an angle to the vertical.

14. Load carrier according to any of the preceding claims, **characterised in that** the swivel bearing assembly (18b) is mounted on longitudinal members (17a, b) of a body (16) of the motor vehicle (12b) and/or on a cross-member (47) of the motor vehicle (12b).

15. Load carrier according to any of the preceding claims, **characterised in that** the rest position area (15b) is provided at least partly between longitudinal members (17a, b) of a body (16) of the motor vehicle (12b).

16. Load carrier according to any of the preceding claims, **characterised in that** the support assembly (13b) has at least one swivel bearing section (29) which, in the operating position (A) of the support assembly (13b), may be so swivelled to enlarge a base carrying area (31) of the support assembly (13b) that it protrudes in front of the base carrying area (31), and may be swivelled towards the base carrying area (31) for space-saving accommodation of the support assembly (13b) in the rest position area (15b).

17. Load carrier according to claim 16, **characterised in that** at least one swivel bearing section (29) lies in its rest position on the base carrying area (31).

18. Load carrier according to any of the preceding claims, **characterised in that** the support assembly (13b) includes a carrier platform (14b) and/or at least a sports equipment rack (49), in particular a cycle rack, for holding sports equipment, in particular a cycle, or a mounting device for attaching a sports equipment rack (49).

## Revendications

1. Support de charge pour un véhicule automobile (12b), en particulier un véhicule personnel, avec un ensemble porteur (13b) pour porter une charge, et avec un ensemble de palier de pivotement (18b) pour le pivotement de l'ensemble porteur (13b) entre une position de non utilisation (N) et une position de travail (A), l'ensemble porteur (13b) dépassant d'une zone arrière (11) du véhicule automobile (12b) dans la position de travail (A) pour la pose d'une charge vers l'arrière, l'ensemble porteur (13b) pouvant être pivoté pour l'occupation de la position de non utilisation (N) dans une zone de position de repos (15b) en dessous d'une carrosserie (16) du véhicule automobile (12b), **caractérisé en ce que** l'ensemble porteur (13b) peut pivoter sur un ensemble de palier de pivotement (18b) entre la position de travail (A) et la position de non utilisation (N) autour d'un axe de pivotement (35) et est mobile axialement le long de l'axe de pivotement (35).

2. Support de charge selon la revendication 1, **caractérisé en ce que** l'ensemble porteur (13b) est protégé au moins sensiblement de la vue dans la zone de position de repos (15b).

3. Support de charge selon la revendication 1 ou 2, **caractérisé en ce que** l'ensemble porteur (13b) présente, dans la position de non utilisation (N), une position plus basse, placée plus près d'une surface de chaussée (25) que dans la position de travail (A).

4. Support de charge selon l'une quelconque des revendications précédentes, **caractérisé en ce que** l'ensemble porteur (13b) peut être pivoté lors d'un déplacement entre la position de travail (A) et la position de non utilisation (N) dans un mouvement haut-bas ou mouvement haut-bas-haut sur l'ensemble de palier de pivotement (18b) de sorte que l'ensemble porteur (13b) plonge sous un composant dépassant vers le bas du véhicule automobile (12b), en particulier un pare-chocs (26).

5. Support de charge selon l'une quelconque des revendications précédentes, **caractérisé en ce qu'**une zone porteuse (24) côté supérieur de l'ensemble porteur (13b) dans la position de travail (A) et dans la position de non utilisation (N) est éloignée de la surface de chaussée (25).

6. Support de charge selon l'une quelconque des revendications précédentes, **caractérisé en ce que** la zone porteuse (24) dans la position de travail (A) et dans la position de non utilisation (N) s'étend sensiblement horizontalement.

7. Support de charge selon l'une quelconque des revendications précédentes, **caractérisé en ce que** l'ensemble porteur (13b) est disposé sur au moins un bras de pivotement (40).

8. Support de charge selon la revendication 7, **caractérisé en ce que** l'au moins un bras de pivotement (40) est courbé et/ou angulaire au moins par sections.

9. Support de charge selon l'une quelconque des revendications précédentes, **caractérisé en ce que** l'ensemble porteur (13b) est fixé de manière amovible sur l'ensemble de palier de pivotement (18b).

10. Support de charge selon la revendication 9, **caractérisé en ce que** l'ensemble de palier de pivotement (18b) présente un support de réception (41), sur lequel au choix une partie de palier (42) maintenant l'ensemble porteur (13b) ou un col de boule (48) pour l'accrochage d'une remorque (50) est disposé.

11. Support de charge selon la revendication 10, **caractérisé en ce que** la partie de palier (42) peut être pivotée sur le support de réception (41) pour le réglage de l'ensemble porteur (13b) entre la position de travail (A) et la position de non utilisation (N) autour d'un axe de pivotement (35) et est mobile axialement le long de l'axe de pivotement (35).

12. Support de charge selon l'une quelconque des revendications 9 à 11, **caractérisé en ce que** l'ensemble de palier de pivotement (18b) présente une sécurité de retrait (46) qui empêche un retrait de la partie de palier (42) du support de réception (41) et **en ce que** la partie de palier (42) peut être retirée après un desserrement de la sécurité de retrait (46) du support de réception (41).

13. Support de charge selon l'une quelconque des revendications précédentes, **caractérisé en ce que** l'ensemble de support (13b) peut être pivoté autour d'un axe de pivotement vertical (35) et/ou un axe de pivotement (35) oblique par rapport à la verticale.

14. Support de charge selon l'une quelconque des revendications précédentes, **caractérisé en ce que** l'ensemble de palier de pivotement (18b) est disposé sur des longerons (17a, b) d'une carrosserie (16) du véhicule automobile (12b) et/ou sur une traverse (47) du véhicule automobile (12b).

15. Support de charge selon l'une quelconque des revendications précédentes, **caractérisé en ce que** la zone de position de repos (15b) est prévue au moins partiellement entre des longerons (17a, b) d'une carrosserie (16) du véhicule automobile (12b).

16. Support de charge selon l'une quelconque des revendications précédentes, **caractérisé en ce que** l'ensemble porteur (13b) présente au moins une partie de support de pivotement (29) qui peut être pivotée dans la position de travail (A) de l'ensemble porteur (13b) pour l'agrandissement d'une zone porteuse de base (31) de l'ensemble porteur (13b) de telle manière qu'il dépasse de la zone porteuse de base (31) et puisse être pivoté pour le logement peu encombrant de l'ensemble porteur (13b) dans la zone de position de repos (15b) vers la zone porteuse de base (31).

17. Support de charge selon la revendication 16, **caractérisé en ce que** l'au moins une partie de support de pivotement (29) repose dans sa position de repos sur la zone porteuse de base (31).

18. Support de charge selon l'une quelconque des revendications précédentes, **caractérisé en ce que** l'ensemble porteur (13b) comporte une plateforme porteuse (14b) et/ou présente au moins un support d'appareil de sport (49), en particulier un porte-vélo, pour le maintien d'un appareil de sport, en particulier d'un vélo, ou un dispositif de fixation pour la fixation d'un support d'appareil de sport (49).
